# EUROPEAN PATENT SPECIFICATION

(11) **EP 1 970 355 B1**
(45) Date of publication and mention of the grant of the patent: **04.05.2011**
(21) Application number: 06834199.9
(22) Date of filing: 07.12.2006
(51) Int. Cl.: C03C 4/08, C03C 3/089, C03C 3/091, H01J 61/30

(54) **LIGHTING GLASS**
BELEUCHTUNGSGLAS
VERRE POUR ECLAIRAGE

(30) Priority: 16.12.2005 JP 2005362683
(43) Date of publication of application: 17.09.2008
(73) Proprietor: Nippon Electric Glass Co., Ltd., Otsu-shi, Shiga 520-8639 (JP)
(72) Inventor: IKEBE, Masaru, Otsu-shi, Shiga 520-8639 (JP); HIKATA, Hajime, Otsu-shi, Shiga 520-8639 (JP)
(74) Representative: Tetzner, Michael
(86) International application number: PCT/JP2006/324444
(87) International publication number: WO 2007/069527

(56) References cited:
- JP-A- 2002 068 775
- JP-A- 2002 293 571
- JP-A- 2004 083 403
- JP-A- 2005 267 974
- JP-A- 2005 320 225
- JP-A- 2005 320 225
- JP-B2- 3 575 114
- US-A- 4 565 791
- US-A1- 2005 037 911

## Description

### TECHNICAL FIELD

The present invention relates to lighting glass, in particular to lighting glass for manufacturing an envelope for a fluorescent lamp that is used as a backlight source of liquid crystal display devices.

### BACKGROUND ART

Since liquid crystal display panels do not emit for themselves, such a lighting apparatus as backlight is necessary. The lighting apparatus is called a backlight unit, which is composed of a lamp being a light source, a reflection plate for reflecting light emitted backward from the lamp to front face, a diffusion plate for homogeneously averaging the light, and a lens sheet for concentrating light to the opening of a liquid crystal cell and reflecting others. The reflection plate, diffusion plate and lens are formed with resin. Specifically, there are a direct type lighting apparatus in which a fluorescent lamp is laid just under a liquid crystal panel, light is guided to the panel side with a reflection plate and the light is made homogeneous with a diffusion plate, and an edge type lighting apparatus in which a fluorescent lamp is laid on a side in the rear of the liquid crystal panel to guide the light from the reflection plate to a light guide plate, and the light is radiated to the liquid crystal panel side through the diffusion plate. The direct type liquid crystal display device is suitable for large-size liquid crystal display panels such as TV, and the edge type liquid crystal display device is widely used for personal computers (PCs) because it can be made thin.

For fluorescent lamps used as a light source, generally a cold cathode fluorescent lamp is used (for example, Patent Document 1). Cold cathode fluorescent lamps are manufactured using electrodes made of Kovar, molybdenum or the like, sealing beads for sealing the electrode, and an envelope made of borosilicate glass with a fluorescent material coated on the inner surface thereof. In addition, the use of a fluorescent lamp having electrodes formed on the envelope surface, which is referred to as an external electrode lamp (for example, Patent Document 2), has been initiated.

The light emission principle of these lamps is the same as that of ordinary hot cathode lamps, that is, such an sealed gas as mercury gas is excited by the discharge between electrodes and the excited gas emits ultraviolet rays to make the fluorescent material coated on the inner wall surface of the envelope emit visible light.

The lifetime of a backlight unit is shown by the duration until the deterioration of light flux to a value that is the half of an initial value. The light flux deterioration is caused not only by the deterioration of a fluorescent lamp as a light source, but also by the deterioration of the reflectance and transmittance of the reflection plate for effectively reflecting the light and the diffusion plate for diffusing the light, which are made of resin, due to coloring caused by the deterioration thereof. The exact source of deterioration of these resin materials is the leakage of ultraviolet rays generated inside the lamp to the outside of the tube. In particular, for the TV application, since it is used over a long period of time, the effect of the leakage of ultraviolet rays on the longer wavelength side (such as 313 nm), which would not lead to any problem for PC applications that require a relatively short lifetime, has become nonnegligible.

Accordingly, it is examined to manufacture an envelope of fluorescent lamp, for which a long lifetime is required, using borosilicate glass having ultraviolet ray-shielding ability. For example, Patent Documents 3 to 5 disclose a fluorescent lamp envelope glass material to which the ultraviolet ray-shielding ability is given by using TiO₂.
Patent Document 1: JP-A-6-111784
Patent Document 2: JP-A-2005-93422
Patent Document 3: Japanese Patent 3575114
Patent Document 4: JP-A-2002-68775
Patent Document 5: JP-A-2005-41768
JP 2005 267974 A, JP 2005320225 A and US-A-4 565 791 also refer to glasses for fluorescent lamps using TiO₂.

### DISCLOSURE OF THE INVENTION

In order to enhance the absorption ability for ultraviolet rays on a longer wavelength side such as 313 nm, containing TiO₂ in a large amount is effective.

However, a glass having been contained with a large amount of TiO₂ easily generates a crystal mainly composed of TiO₂ when the glass contacts with a refractory upon forming a glass tube. When the crystal generates in the glass, the circularity of the glass tube lowers and the fluorescent material can not be coated homogeneously to generate the unevenness of lamp luminance. In addition, since the circumference of the crystal is concaved, when a crystal-precipitating portion overlaps a sealing portion, a gap may generate to lead to slow leakage and the lamp may not light.

In addition, when the content of TiO₂ increases, the phase separation tendency of glass increases. Therefore, such phenomenon easily occurs that the phase separation occurs in glass in the sintering process of the fluorescent material coated inside the glass tube to deteriorate the transmittance. When such phenomenon occurs, a lamp to be obtained becomes dark.

The purpose of the present invention is to provide lighting glass that can shield ultraviolet rays on the longer wavelength side such as 313 nm, and, in addition, hardly generates TiO₂-based crystals and phase separation.

The lighting glass of the invention is characterized by containing from 50 to 75% of SiO₂, from 12 to 25% of B₂O₃, from 0 to 3% of Al₂O₃, from 0 to 0.3% of Li₂O, from 0 to 7% of Na₂O, from 3 to 15% of K₂O, from 6 to 15% of Li₂O + Na₂O + K₂O, from 0 to 3.2% of Al₂O₃ + Li₂O, from 0 to 20% of BaO, from 0 to 15% of ZnO, from 2.5 to 4.9% of TiO₂ and from 0 to 5% of As₂O₃ + Sb₂O₃ in mass percentage, and having the coefficient of thermal expansion of from 45 to 58 × 10⁻⁷ /°C in the range of from 30 to 380°C.

The envelop for a fluorescent lamp of the invention is characterized by being composed of the above-described lighting glass.

### (Advantage of the Invention)

The lighting glass of the invention has a necessary ultraviolet ray-shielding ability at 313 nm, not to deteriorate resin members constituting a backlight unit. In addition, since the precipitation amount of TiO₂ crystal is extremely little, it is possible to manufacture an envelope having a high dimensional accuracy and sealing reliability. Furthermore, since phase separation tendency is weak, a lamp that hardly darkens is obtained. Therefore, it is suitable as an envelope material for a fluorescent lamp, in particular as an envelope material of a thin fluorescent lamp that is used as a light source of a lighting apparatus of a liquid crystal display device for such application as TV that is assumed to be used for a long period of time.

In addition, the use of an envelope composed of the above-described glass makes it possible to manufacture a fluorescent lamp that has a high luminance and scarcely shows deterioration of the luminance. Therefore, it is suitable for such an application as the envelope of a fluorescent lamp for a backlight unit of apparatuses, which are used for a long period of time such as TV.

### BEST MODE FOR CARRYING OUT THE INVENTION

The lighting glass of the present invention is composed of borosilicate glass having a high mechanical strength. When manufacturing an envelope of a cold cathode fluorescent lamp that uses Kovar or molybdenum for an electrode, the coefficient of thermal expansion thereof at from 30 to 380°C is preferably adjusted in the range of from 45 to 58 × 10⁻⁷ /°C.

By containing TiO₂ in a large amount, it becomes possible to effectively shield the ultraviolet ray of 313 nm. Furthermore, in the invention, in order to prevent the precipitation of TiO₂-based crystals and the increase in the tendency of phase separation that occur caused by the containion of TiO₂ in a large amount, the content of Al₂O₃ and Li₂O is limited. When making a detailed explanation, a smaller content of Al₂O₃, leads to less precipitation of TiO₂-based crystals that occurs when glass contacts with a refractory. A smaller content of Li₂O leads to weakened tendency of the phase separation of glass. Furthermore, when the phase separation of glass occurs, a crystal easily precipitates, but when weakening the tendency of the phase separation by decreasing the content of Li₂O, the precipitation of TiO₂-based crystals can further be inhibited.

Incidentally, if the content of Al₂O₃ alone is decreased without decreasing the content of Li₂O, the viscosity of the glass decreases to make it difficult to obtain the viscosity property equivalent to that of conventional products. Further, if the content of Li₂O alone is decreased without decreasing the content of Al₂O₃, the viscosity of the glass increases to make it difficult to obtain the viscosity property equivalent to that of conventional products. Accordingly, by simultaneously decreasing the both, it becomes possible to obtain the above-described effect without changing the viscosity property. But, a too much content of TiO₂ makes it difficult to inhibit the increase in the precipitation of TiO₂-based crystals or tendency of phase separation, even when the content of both Al₂O₃and Li₂O is limited. Suitable contents of Al₂O₃, Li₂O and TiO₂ are shown below.

The ratio of Al₂O₃, Li₂O and TiO₂ is preferably as follows in mass percentage: Al₂O₃ + Li₂O from 0 to 3% and TiO₂ from 2.5 to 4.2%.

Hereinafter, the reason why the composition of the lighting glass of the invention is limited as above is described.

SiO₂ is the main component necessary for constituting the glass network, the content of which is 50% or more, preferably 55% or more, further preferably 58% or more. In addition, it is 75% or less, preferably 72% or less, further preferably 69% or less. When SiO₂ is contained in 75% or less, a long time is not required for melting a silica raw material. When it is 72% or less, the crystal of SiO₂ hardly generates in the glass. Further, when it is 69% or less, also the deterioration of dimensional accuracy caused by the partial unevenness of viscosity can effectively inhibited. On the other hand, when the content of SiO₂ is 50% or more, an excellent weather resistance can be obtained by a synergistic effect with TiO₂. When it is 55% or more, the crystal is not liable to generate, therefore stable glass can be obtained. Most preferably it is 58% or more.

B₂O₃ is a component that is contained in a relatively large amount for enhancing the meltability, adjusting the viscosity, enhancing the weather resistance and adjusting the expansion coefficient. The content thereof is 12% or more, preferably 15% or more, and the upper limit thereof is 25% or less, preferably 22% or less. When the content of B₂O₃ is 25% or less, the amount of volatile substances from a glass melt is small to give homogeneous glass. When it is 22% or less, since the evaporation amount of the glass component is small also during heat processing in the lamp production process, the processing thereof becomes easy. On the other hand, when the content of B₂O₃ is 12% or more, the viscosity is sufficiently low to allow a tube glass with a good dimensional accuracy to be easily obtained. When it is 15% or more, since the melting is easier, the glass is suitable for mass production.

Al₂O₃ is a component that reinforces the glass network having been cut by containing an alkali component to significantly improve devitrification tendency of glass at melting. On the one hand, since it blocks the penetration of TiO₂ into glass, it allows TiO₂-based crystals to generate easily. Further, it is a component that increases the viscosity of glass. The content of Al₂O₃ is 3% or less, further preferably 2.5% or less. When the content of Al₂O₃ is less than 3%, TiO₂-based crystals hardly generate. The content of 2.5% or less makes the viscosity sufficiently low to allow tube glass with a high dimensional accuracy to be easily obtained. In addition, TiO₂-based crystals hardly precipitate in a low temperature region. Incidentally, Al₂O₃ is not an indispensable component, but it is preferably contained in 0.1% or more in order to perform the production of homogeneous glass and stable forming.

Li₂O, Na₂O or K₂O, which is an alkali metal oxide (R₂O), has such effect as adjusting the coefficient of thermal expansion and viscosity, and enhances the meltability to easily give glass having excellent dimensional properties. On the other side, it deteriorates the weather resistance of glass. For example, it reacts with carbon dioxide and water in the air to form a product, which causes a foreign material on the glass surface. Therefore, the alkali content must be controlled within a suitable range.

In a borosilicate glass containing a large amount of TiO₂, Li₂O has such action as accelerating phase separation in addition to the above-described one. Further, it is also a component that allows TiO₂-based crystals to easily generate through phase separation. The content of Li₂O is limited to 0.3% or less. When the content of Li₂O is less than 0.3%, phase separation hardly generates and a lamp hardly darkens. Furthermore, in order to make the precipitation of TiO₂-based crystals hard, it is preferably 0.3% or less. If intended properties can be obtained for meltability, expansion properties and viscosity by the use of another alkaline component or the like, Li₂O is not necessarily contained. The adjustment of the viscosity, which is required along with the decrease in the amount of Al₂O₃, can effectively be performed by the decrease in the amount of Li₂O.

Na₂O is an arbitrary component, and can be contained in 7% or less, preferably in 5% or less. When the content of Na₂O is 7% or less, practically sufficient weather resistance can be assured and a tube drawing/forming becomes easy. When it is 5% or less, the coefficient of thermal expansion can easily be matched with that of Kovar or molybdenum. Incidentally, when two or more kinds of alkali metal oxides are contained for the purpose of obtaining an alkali mixing effect, the content of Na₂O is preferably 0.1% or more.

K₂O is contained in 3% or more, particularly preferably in 5% or more. The upper limit thereof is 15% or less, particularly preferably 11% or less. When the content of K₂O is 15% or less, the coefficient of thermal expansion is easily matched with that of Kovar or molybdenum, and when it is 11% or less, sufficiently high weather resistance can be maintained.

The total content of alkali metal oxides is 6% or more, preferably 7% or more. The upper limit thereof is 15% or less, preferably 12% or less. When the total amount of these components is 15% or less, the coefficient of thermal expansion is not too high, and it is easily matched with that of metal to be sealed such as Kovar. When it is 12% or less, sufficiently high weather resistance can be maintained, therefore the generation of foreign matter can be prevented. On the other hand, when the total amount of these components is 6% or more, the coefficient of thermal expansion is not too small, and it is easily matched with that of Kovar or molybdenum. When it is 7% or more, vitrification occurs easier and homogeneous glass is easily obtained.

Incidentally, in order to try to improve electric resistance based on the alkali mixing effect, two or more kinds of alkali metal oxides are desirably contained. Among alkali metal oxides, when K₂O is contained in a larger amount, the electric resistance at 150°C is liable to increase. This is because a K⁺ ion has a larger ion radius as compared with other alkali ions and hardly moves in glass. Accordingly, the K₂O is desirably contained in the greatest content among alkali metal oxides.

Al₂O₃ and Li₂O are components that make TiO₂-based crystals precipitate, or strengthen phase separation tendency, therefore it is desirable to limit the total content thereof to 3.2% or less, preferably 3% or less, particularly 2.9% or less, furthermore 2.5% or less. The lower limit thereof is desirably 0.1% or more, particularly 0.5% or more. When the total content of these components is 3.2% or less, there is an effect of preventing the precipitation of TiO₂-based crystals. However, limiting it to 2.9% or less is desirable when taking mass productivity into consideration because a lower forming temperature is required, and limiting it to 2.5% or less is desirable, if possible, in order to enhance reliability. When it is 0.1% or more, the effect of improving meltability is recognized. When they are contained in 0.5% or more, melting becomes easy to lead to a better production efficiency.

BaO is a component that lowers the melting point and suppresses the phase separation of glass to stabilize. BaO is an arbitrary component and can be contained in 20% or less, preferably 8% or less. When the content of BaO is 20% or less, the precipitation tendency of a crystal that contains BaO as the main component becomes small. When it is 8% or less, glass having a better dimensional accuracy can be obtained, preferably.

ZnO is a component that aids the melting of glass. In addition, it exerts such effect as maintaining the transparency of glass by preventing the phase separation and enhancing stability. Further, it exerts the effect of lowering the viscosity of glass. On the one hand, since ZnO itself is volatile, the content thereof is 15% or less, particularly 3% or less.

TiO₂ is known to have absorption in an ultraviolet region, and is a component that absorbs ultraviolet rays to give a shielding effect to glass. Further, it is a component that gives short wavelength ultraviolet ray discoloration resistance to glass. In addition, it exerts such effects as enhancing weather resistance of glass and enhancing the elastic modulus thereof to increase the strength. On the one hand, when the content increases, TiO₂-based crystals are easily generated. In addition, it is a component that strongly accelerates the phase separation. The content of TiO₂ is 2.5% or more, preferably 3.1% or more, more preferably 3. 6% or more, furthermore preferably 3.8% or more. The upper limit thereof is 4.9% or less, preferably 4.4% or less, further preferably 4.2% or less. The thinnest wall thickness of glass envelope that are used under present circumstances is 0.3 mm from the standpoint of strength, except for special applications. Required ultraviolet ray-shielding ability is such that the ultraviolet ray transmittance for the thickness of 0.3 mm at 313 nm is about 25% or less, when taking the absorption by a fluorescent material into consideration. If the content of TiO₂ is 2.5% or more, the shielding of 313 nm ultraviolet ray becomes possible when the glass wall is thick. When the glass wall thickness is around 0.5 mm for the content of 3.1% or more, and when the glass wall thickness is around 0.3 mm for the content of 3.6% or more, sufficient 313 nm ultraviolet ray-shielding ability can be obtained, respectively. On the other hand, when the content is 4.9% or less, the production is possible although TiO₂-based crystals may be generated. When it is 4.4% or less, the crystal is furthermore hardly generated, to make the glass suitable for mass production. Furthermore, in order to decrease the forming temperature to raise the mass production efficiency and to enhance the reliability at sealing, it is required that TiO₂-based crystals are scarcely generated. In order to easily accomplish this, limiting the content to 4.2% or less is recommended.

As₂O₃ and Sb₂O₃ are components that give refining effect to glass. When TiO₂ is contained in a large amount, coloring due to an Fe₂O₃ impurity easily occurs, but As₂O₃ and Sb₂O₃ exert to prevent such coloring, as described later. These components are contained in 5% or less, preferably in 1% or less, in total. When the total content thereof exceeds 5%, such disadvantage generates that glass becomes black at heating in the next processing of the glass. Incidentally, in order to obtain the above-described effect, preferably at least either of these is contained. These are desirably contained in 0.0001% or more, particularly 0.001% or more, 0.01% or more, furthermore 0.1% or more, in total.

Although As₂O₃ is an arbitrary component, when it is going to be added, it is contained preferably in 0.0001% or more, further preferably in 0.001% or more. The upper limit thereof is preferably 1% or less, particularly 0.1% or less, furthermore 0.05% or less, most suitably 0.01% or less. When the content of As₂O₃ is 0.0001% or more, the above-described effect begins to appear, but desirably it is 0.001% or more. On the other hand, when it is too much, reduction tendency may occur depending on glass melting condition. From an environmental point of view, the less content is better.

Sb₂O₃ is also an arbitrary component, as is the case for As₂O₃. Sb₂O₃ has such characteristic that it exerts a weaker effect as compared with As₂O₃ but is environment-friendly. Sb₂O₃ is contained preferably in 0.0001% or more, particularly in 0.001% or more, furthermore in 0.01% or more. And, the content is desirably 5% or less, particularly 3% or less. When the content of Sb₂O₃ is 0.0001% or more, the effect thereof begins to appear, but when it is 0.001% or more, particularly 0.01% or more, there remains a room for refining ability upon mass production, preferably. When a large amount of Sb₂O₃ is contained in glass, blackening easily occurs upon processing a lamp due to the reduction of Sb₂O₃. However, the content of Sb₂O₃ of 5% or less hardly allows blackening to occur, and that of 3% or less makes more stable processing of glass possible.

The lighting glass of the invention may be contained with various components in addition to the above-described ones. For example, MgO, CaO, SrO, Nb₂O₅, WO₃, ZrO₂, Ta₂O₅, SnO₂, CeO₂, SO₃, Fe₂O₃, Cl₂ and the like may be contained.

MgO and CaO are components that aid the melting of glass. MgO and CaO each is an arbitrary component, and can be contained in 10% or less, preferably 5% or less. When the content of each component is 10% or less, the tendency of crystallization becomes small. When it is 5% or less, glass having more excellent dimensional accuracy is obtained, preferably.

SrO is a component that lowers the melting point of glass and prevents the phase separation of glass to stabilize, same as BaO. SrO is an arbitrary component, and can be contained in 20% or less, preferably in 8% or less. When the content of SrO is 20% or less, the tendency of precipitating a crystal including SrO as the main component becomes small. When it is 8% or less, glass having more excellent dimensional accuracy is obtained, preferably.

Nb₂O₅ is a component that enhances the ultraviolet ray-shielding effect of TiO₂ on the longer wavelength side. In addition, it contributes to prevent the discoloration of glass by absorbing short wavelength ultraviolet rays. In order to obtain the effect, it is desirably contained in 0.005% or more. Incidentally, Nb₂O₅ is liable to accelerate the phase separation to easily influence the luminance and hue of lamp. Accordingly, the use in a large amount should be avoided. Therefore, the content of Nb₂O₅ is preferably 10% or less, particularly 7% or less.

WO₃ is a component that exerts such effect as absorbing ultraviolet rays and contributes to prevent the discoloration of glass caused by short wavelength ultraviolet rays by absorbing ultraviolet rays. In order to obtain the effect, it is desirably contained in 0.005% or more. Incidentally, WO₃ shows the tendency of absorbing visual light to easily influence the luminance and hue of a lamp. Accordingly, the use in a large amount should be avoided. Therefore, the content of WO₃ is preferably 10% or less, particularly 7% or less.

ZrO₂ is a component, on the one hand, that enhances the weather resistance of glass, and is also a component that increases the viscosity of glass, which can be contained in up to 9%, preferably in up to 6%. When the content of ZrO₂ increases, the viscosity of glass rises to allow bubbles to easily remain. In addition, there is such a tendency that a crystal is generated in glass to make the tube drawing/forming difficult. However, when the content is 9% or less, a tube glass capable of being used for fluorescent lamp application can be stably formed. When it is 6% or less, the tendency of precipitating a crystal becomes low to allow glass having more excellent dimensional accuracy to be easily obtained. ZrO₂ may be immixed from a glass raw material or refractory by 0.001% or more, and the above effect can be expected when the total ZrO₂ amount including these is 0.002% or more.

Ta₂O₅ exerts the effect of preventing the discoloration of glass caused by short wavelength ultraviolet rays, and can be contained in up to 10%, preferably in up to 6%. When the content is 10% or less, a glass tube that hardly allows crystals to precipitate and is excellent in dimensional accuracy is obtained. When it is 6% or less, the tendency of crystallization becomes low to give glass having more excellent dimensional accuracy, preferably.

SnO₂ is effective as a refining agent. In order to obtain the refining effect, it is desirably contained in 0.0001% or more. When being contained in a large amount, SnO₂ makes a crystal precipitate in glass. But, when the content is 5% or less, no crystal generates, and, when it is 3% or less, more stable melting is possible.

CeO₂ also exerts the refining effect, same as As₂O₃. The content thereof is preferably 3% or less, particularly 0.2% or less, furthermore 0.05% or less, most suitably 0.01% or less. When the content of CeO₂ is 3% or less, there is no such apprehension that crystal is generated in glass. But, when CeO₂ coexists with TiO₂, yellow coloring easily occurs. Therefore, the use amount is desirably limited as far as possible. Incidentally, in order to obtain the above effect, the content is desirably 0.0001% or more.

Compounds that generate SO₃ also exert the refining effect same as As₂O₃, but there is such disadvantage that SO₃ itself easily causes bubbles. remain Incidentally, SO₃ in glass is taken in the glass composition not only from glass raw materials (sulfate raw material such as mirabilite (Na₂SO₄) and impurities), but also as SO₂ gas in the combustion atmosphere, which is dissolved in glass melt at glass melting. In order to obtain the same effect as is exerted by As₂O₃, glass raw materials may be added so that the SO₃ content in glass (glass product) is 0.0001% or more, in particular 0.0005% or more. But, in order to prevent the generation of a large amount of bubbles, the SO₃ content in glass (glass product) is desirably adjusted to 0.2% or less, particularly 0.1% or less, furthermore 0.05% or less, most suitably 0.01% or less. Incidentally, in order to reduce SO₃ that is taken in from sources other than glass raw materials, it is sufficient to employ such means as reducing the SO₃ partial pressure in a melting atmosphere, adjusting the melting temperature, using another refining agent, or bubbling. It is also important to select and regulate fuel used in melting glass.

The content of Fe₂O3 is preferably 0.05% or less, particularly 0.02% or less, furthermore 0.01% or less. When the content of Fe₂O₃ is 0.05% or less, such situation that glass colors significantly can be avoided. When it is 0.02% or less, even a composition system including a lot of TiO₂ hardly colors. The content of 0.01% or less makes the coloring extremely hard. Incidentally, since Fe₂O₃ is easily immixed as an impurity, the content thereof must be strictly regulated, while including impurities. Completely eliminating Fe₂O₃ from glass composition requires extremely high cost, and is difficult technologically. Therefore, the lower limit value of the Fe₂O₃ content is realistically set 0.001% or more, while including impurities.

An Fe²⁺ ion has broad absorption covering from a part of visible region to infrared region, therefore the ion itself causes coloring. The Fe²⁺ ion can also be utilized as an indicator for regulating coloring caused by an Fe³⁺ ion having a low coordination number. That is, when glass is in a more oxidized state, a large portion of Fe³⁺ exist as Fe³⁺ having a high coordination number with no absorption in the visible region. When the Fe³⁺ having a high coordination number exists in a large amount, glass, which has strong light absorption in ultra violet region and has no absorption in visible region, is formed. That is, such glass, which has a sharp absorption edge in ultra violet region in the transmittance curve thereof and is colorless and transparent, is obtained. On the other hand, when Fe²⁺ exists in a large amount, Fe²⁺ itself brings about the coloring, and, at the same time, the amount of the Fe³⁺ having a low coordination number increases in proportion to the amount of Fe²⁺ to show the coloring. Accordingly, in order to obtain sufficiently colorless and transparent borosilicate glass, it is desirable to realize an oxidized state as far as possible to reduce the ratio of the Fe²⁺ and Fe³⁺ having a low coordination number, thereby increasing the ratio of the Fe³⁺ having a high coordination number as much as possible.

Making glass have an oxidized state can be accomplished by using an oxidizing agent, removing organic compounds and metal iron that are going to mix with raw materials of glass, bubbling oxygen, or regulating the oxygen partial pressure in a melting atmosphere. For example, As₂O₃ and Sb₂O₃ that are added in the invention have such effect.

Cl₂ is an arbitrary component. Cl₂ exerts an effect as a refining agent. When going to obtain the effect, the remaining amount of Cl₂ in glass (glass product) is desirably 0.001% or more in terms of Cl₂. Incidentally, from the standpoint of maintaining labor environment, the Cl₂ content is preferably 0.5% or less.

In addition, the lighting glass of the invention has a coefficient of thermal expansion of from 45 to 58 × 10⁻⁷ /°C in the range of from 30 to 380°C. Usually, sealing beads for sealing electrodes (introduction metal) of a fluorescent lamp are made of glass having the same material properties as an envelope. Accordingly, envelopes are required to have the coefficient of thermal expansion that matches with Kovar (coefficient of thermal expansion: 58 × 10⁻⁷ /°C) or molybdenum (coefficient of thermal expansion: 52 × 10⁻⁷ /°C), which is a material for electrodes. When the coefficient of thermal expansion is within the above range, Kovar or molybdenum can be used as a material for electrodes. Incidentally, needless to say, it can also be used as an envelope of external electrode lamps having no electrode inside thereof.

In addition to the above, such properties are required that the glass annealing point matches with Kovar (when Kovar is used as electrodes), the glass softening point is sufficiently high and glass coloring due to ultraviolet rays does not appear.

Specifically, Kovar has the Curie point near 450°C to rapidly change the expansion thereof, therefore, in order to match expansion to the change, the strain point of glass preferably exists near 460°C. In addition, so that a glass tube is not deformed when baking a fluorescent material, preferably glass has a softening point of around 700°C or more. Further, so that the luminance of a lamp is not lowered, it is desirable that no discoloration occurs due to short wavelength ultraviolet rays (such as 253.7 nm, 185 nm).

Next, the envelope for a fluorescent lamp of the invention will be described.

Firstly, raw materials are compounded so as to give glass having the above composition of lighting glass, which is then melted. The molten glass is then formed into a tubular shape by such a tube-drawing method as a Danner method, down draw method and up draw method. Incidentally, from the standpoint of mass production, the Danner method is desirably adopted. When the Danner method is adopted, since glass is contacted with a refractory for a longer time as compared with the case of other methods, TiO₂-based crystals are liable to precipitate. Therefore, it can be said that adopting the above-described glass composition leads to a large merit.

Incidentally, the cooling speed after forming glass into a tubular shape by the Danner method or the like is desirably made larger as compared with the case of conventional glass.

Because, by rapidly cooling glass after forming it into a tubular shape, the coloring of glass can be reduced. That is, although glass under melting is colorless and transparent, it is easily colored when being slowly cooled through the region of from around 800°C to around 500°C. The reason why coloring reduces by rapid cooling is considered as follows. The phenomenon is considered to occur due to the change of the interval between a cation (Fe, Ti) and a ligand (O) depending on the cooling speed. Since ions constituting glass can freely move in glass under melting, the interval between ions is large. Along with the cooling, the interval between ions becomes small, thereby beginning to give an influence on mutual bond and coordination. A slower cooling speed leads to a smaller interionic interval to make mutual influence larger. When the cooling speed is high, glass is solidified in such a state that is similar to the state under melting to keep the interionic interval large, thereby keeping the mutual influence small. It is considered that, when the interionic interval is narrow, Ti ions give influence on the coordination state of Fe³⁺ ions, so that as if they have approximately a coordination state of low coordination number to color the glass.

Subsequently, the tubular glass is cut in an intended size, which may be subjected to post-processing according to need, and the envelope for a fluorescent lamp of the invention can be obtained.

The envelope for a fluorescent lamp of the invention thus obtained is colorless and transparent, and can effectively shield ultraviolet rays of 313 nm or shorter. Furthermore, it has an excellent low wavelength ultraviolet ray coloring resistance.

In addition, the envelope of the invention is composed of the glass having the above-described composition, therefore the precipitation amount of TiO₂-based crystals is small. Specifically, TiO₂-based crystals exist on the inner surface of tube desirably in 10 /100cm² or less, particularly in 1/100cm². Incidentally, TiO₂-based crystals mean crystals that contain TiO₂ as the constituent of a crystal.

This envelope for a fluorescent lamp is provided to, for example, the manufacture of a fluorescent lamp for backlight of a liquid crystal display device.

### Example

Hereinafter, the present invention will be described on the basis of Examples. Tables show about Examples of the invention (samples No. 1 to 5, 12 to 14) and Comparative Examples (samples No. 6 to 11).

**Table 1**

| | 1 | 2 | 3 | 4 | 5 | 6 | 7 |
|---|---|---|---|---|---|---|---|
| Glass Composition(%by mass) | | | | | | | |
| SiO₂ | 67.7 | 65.7 | 67.2 | 65.0 | 67.4 | 64.1 | 65.4 |
| B₂O₃ | 16.9 | 19.0 | 17.2 | 18.7 | 17.5 | 18.5 | 17.7 |
| Al₂O₃ | 2.2 | 2.2 | 1.6 | 1.0 | 2.0 | 3.0 | 2.8 |
| BaO | | | | 1.0 | | | |
| ZnO | | | 0.5 | | | 0.5 | |
| Li₂O | | | 0.3 | 0.2 | 0.2 | 0.7 | 0.7 |
| Na₂O | 2.5 | 2.4 | 0.8 | 0.7 | 0.6 | 0.4 | 0.9 |
| K₂O | 6.5 | 6.5 | 8.2 | 8.3 | 8.3 | 8.2 | 7.7 |
| Nb₂O₃ | | | | 0.5 | | | |
| WO₃ | | | | 0.5 | | | |
| CeO₂ | | | | 0.1 | | | |
| Sb₂O₃ | 0.1 | 0.3 | 0.2 | 0.2 | 0.2 | 0.5 | 0.2 |
| TiO₂ | 4.0 | 3.8 | 4.0 | 3.8 | 3.8 | 4.1 | 4.6 |
| ZrO₂ | 0.1 | 0.1 | | | | | |
| R₂O | 9.0 | 8.9 | 9.3 | 9.2 | 9.1 | 9.1 | 9.3 |
| Al₂O₃+Li₂O | 2.2 | 2.2 | 1.9 | 1.2 | 2.2 | 3.5 | 3.5 |
| Impurity | | | | | | | |
| Fe₂O₃ | 0.007 | 0.015 | 0.012 | 0.015 | 0.002 | 0.001 | 0.012 |
| SO₃ | Unmeasured | Unmeasured | Unmeasured | Unmeasured | Unmeasured | Unmeasured | Unmeasured |
| Coefficient of Thermal Expansion | 50.5 | 50.4 | 51 | 50.7 | 51.1 | 50.8 | 51.1 |
| Strain Point (°C) | 453 | 457 | 469 | | 453 | | 450 |
| Softening Point(°C) | 707 | 725 | 725 | | 715 | | 706 |
| Precipitation Temperature of TiO2-based crystals (°C) | 900 | 890 | 890 | | 870 | 942 | 982 |
| UV-Shielding Ability at 313nm | ○ | ○ | ○ | ○ | ○ | ○ | ○ |
| Amount of TiO₂ -based Crystals on the Inner Surface of Tube (100cm²) | <1 | <1 | | | <1 | | 24 |
| Phase Separation Tendency | ○ | ○ | | | ○ | Δ | × |
| Coloring Degree Coloring Degree | ○ | ○ | | | ○ | | |
| Short Wavelength Ultraviolet Ray Discoloration Resistance | ○ | ○ | | | ○ | | |

**Table 2**

| | 8 | 9 | 10 | 11 | 12 | 13 | 14 |
|---|---|---|---|---|---|---|---|
| Glass Composition(%by mass) | | | | | | | |
| SiO₂ | 63.8 | 63.9 | 64.0 | 67.0 | 65.3 | 67.8 | 67.3 |
| B₂O₃ | 18.5 | 18.5 | 18.5 | 18.5 | 18.5 | 17.5 | 17.6 |
| Al₂O₃ | 3.5 | 2.9 | 2.5 | 2.0 | 2.0 | 1.0 | 1.9 |
| BaO | | | | 0.5 | 0.5 | | |
| ZnO | 0.5 | 0.5 | | 0.5 | 0.5 | | |
| Li₂O | 0.4 | 1.0 | 0.3 | 0.2 | 0.2 | | |
| Na₂O | 0.5 | 0.4 | 0.4 | 1.4 | 1.4 | 1.9 | 2.3 |
| K₂O | 8.2 | 8.2 | 8.3 | 7.2 | 7.2 | 7.3 | 6.3 |
| Nb₂O₃ | | | | | | | |
| WO₃ | | | | | | | |
| CeO₂ | | | | | | | |
| Sb₂O₃ | 0.5 | 0.5 | 1.0 | 0.3 | 0.3 | 0.4 | 0.2 |
| TiO₂ | 4.1 | 4.1 | 5.0 | 2.4 | 4.1 | 4.1 | 4.3 |
| ZrO₂ | | | | | | | 0.1 |
| R₂O | 9.1 | 9.6 | 9.0 | 8.8 | 8.8 | 9.2 | 8.6 |
| Al₂O₃+Li₂O | 0.9 | 1.5 | 2.8 | 2.2 | 2.2 | 1.0 | 1.9 |
| impurity | | | | | | | |
| Fe₂O₃ | 0.004 | 0.011 | 0.012 | 0.016 | 0.016 | 0.007 | 0.012 |
| SO₃ | Unmeasured | Unmeasured | Unmeasured | Unmeasured | Unmeasured | Unmeasured | 0.002 |
| Coefficient of | 50.7 | 53.8 | 50.2 | 49.3 | 49.7 | 51.2 | 49.8 |
| Strain Point (°C) | 450 | 456 | 452 | 453 | 454 | 469 | 455 |
| Softening Point (°C) | 707 | 684 | 712 | 718 | 705 | 725 | 710 |
| Precipitattion Temperature of Tio-based Crystals(°C) | 945 | 931 | 1022 | - | 914 | 856 | 885 |
| UV-Shielding Ability at 313nm | ○ | ○ | ○ | × | ○ | ○ | ○ |
| AmounT of TiO₂-based Crystals on the Inner Surface of Glass Tube (/100cm²) | 3 | 4 | | | | | <1 |
| Phase Separation Tendency | × | × | × | ○ | ○ | ○ | ○ |
| Coloring Degree | ○ | ○ | Δ | ○ | ○ | ○ | ○ |
| Short Wavelength Ultraviolet Ray Discoloration Resistance | ○ | ○ | ○ | ○ | ○ | ○ | ○ |

Each of samples was prepared in the following way.

Firstly, raw materials of glass were compounded so as to give the composition as shown in Tables, which were then melted using a platinum crucible at 1550°C for 8 hours. Subsequently, the glass melt was formed and processed into an intended shape, which was provided to respective evaluations. Incidentally, the content of Fe₂O₃in Tables is the amount of impurity having been immixed from raw materials. The content of SO₃ is an immixed amount from raw materials and/or burning atmosphere. Regarding the content of Fe₂O₃, a value quantitatively measured by the fluorescent X-ray method after manufacturing the glass sample is shown. Regarding the content of SO₃, a value obtained by chemical analysis is shown.

As raw materials of glass, stone dust, alumina, boric acid, lithium carbonate, sodium carbonate, potassium carbonate, potassium nitrate, barium carbonate, zinc oxide, titanium oxide, antimony oxide, niobium pentoxide, tungsten oxide, zircon, cerium oxide and sodium sulfate were used. Incidentally, raw materials are not limited to these kinds, but they may be suitably selected while considering oxidation-reduction state and moisture content of glass, and the like. Further, the value of respective components shown in the composition is a converted value, and oxides are not limited to those having the shown valence.

As clear from Table 1, in samples Nos. 1 to 5 and 12 to 14, which were obtained in Examples of the invention, TiO₂-based crystals are generated at a low temperature, therefore a glass tube can be formed with high accuracy. Further, there is no such risk that a gap occurs upon air-tightly sealing the obtained glass tube to lead to slow leak.

The coefficient of thermal expansion was obtained with a thermal expansion-measuring apparatus.

The strain point was obtained according to ASTM C336.

The softening point was obtained according to ASTM C338.

The crystal precipitation temperature (precipitation temperature of TiO₂-based crystals) at the interface with platinum was obtained as follows. In a platinum boat (long vessel having a length of 15 cm), glass was laid and the whole was heated at 1250°C for 2 hours, then the defoamed glass was laid in a temperature gradient furnace (850 to 1050°C) for 70 hours. The obtained sample was cooled and taken out, and the bottom face having been contacted with platinum was observed with a polarization microscope having a magnification of 50 to define the highest temperature among temperatures corresponding to portions where the crystal was observed as the crystal precipitation temperature. Incidentally, it was confirmed that crystals precipitating at the interface with platinum are TiO₂-based crystals by EPMA analysis.

Next, while using a glass having the same composition as the above-described glass sample, an envelope for a fluorescent lamp was prepared.

Raw materials having been prepared so as to give glasses equivalent to respective samples (the composition in Table 1) were melted in a refractory furnace at 1600°C. Then, the glass melt was supplied to a Danner-forming apparatus to be subjected to a tube drawing/forming, which was cut to give an envelope having an outer diameter of 4 mm, wall thickness of 0.3 mm and length of 1600 mm. For the Danner apparatus, a sleeve made of an alumina-silicate-based refractory containing about 60% of Al₂O₃ was used.

For the obtained envelope sample, ultraviolet ray-shielding ability at 313 nm, the amount of TiO₂-based crystals on the inner surface of the tube, phase separation tendency, coloring degree, and short wavelength ultraviolet ray discoloration resistance were evaluated. Results are shown in the Table.

From the evaluation result, respective samples obtained in Examples of the invention have ultraviolet ray-shielding ability at 313 nm. It was also confirmed that the precipitation amount of TiO₂-based crystals was very small. Further, since the glass has a weak phase separation tendency and, in addition, is hardly discolored by short wavelength ultraviolet rays, a fluorescent lamp that has high luminance and, in addition, hardly shows the lowering of luminance can be manufactured.

For the 313 nm ultraviolet ray-shielding ability, the spectral transmittance at 313 nm was measured after preparing a sample formed by cutting a tube glass having an outer diameter of 4 mm and wall thickness of 0.3 mm into a half tube shape. The ability was determined to "O" when the transmittance was 25% or less. The ultraviolet ray of 313 nm in wavelength derives from the bright line of mercury.

The precipitation amount of TiO₂-based crystals was evaluated by observing the inner surface of the glass tube with a × 10 magnifier, counting the number of detected crystals, and showing the number in terms of the unit inner surface area (100 cm²) of a tube glass.

The phase separation tendency was evaluated by heating a tube glass having a length of 100 mm at 700°C, which is the burning temperature of a fluorescent material, for 10 minutes, and then observing the resulting product by the same method as in the coloring degree below. The brightness after the burning was compared with that before the burning, and a case where no change existed was rated as "O", and a case where cloudiness occurred in the tube glass wall direction was rated as "×".

The coloring degree was evaluated as follows. Firstly, a tube glass having a length of 500 mm was vertically hung in a state of penetrating black paper, then homogeneous white light with no directivity was irradiated from the lower end, and the hue of the tube glass upper end face was observed. A case where the hue was clearly better than or equal to hue evaluated in the same way as described above for BFK, which is glass for backlight manufactured by Nippon Electric Glass Co., LTD., with the same length was rated as "O".

The short wavelength ultraviolet ray discoloration resistance was evaluated on the basis of the difference between transmittances in visible region before and after the irradiation of short wavelength ultraviolet rays. Firstly, both sides of a plate-like glass having a thickness of 1 mm were mirror finished to give a sample. Then, light, which had a wavelength at which the transmittance of the sample before the irradiation of short wavelength ultraviolet rays was 80%, was searched. Next, the sample was irradiated by a 40 W low pressure mercury lamp constituted of quartz glass that emits short wavelength ultraviolet rays of 253.7 nm as the primary wavelength (and other ultraviolet rays having wavelengths of 185 nm, 313 nm, 365 nm) for 60 minutes (irradiation distance: 25 mm). Then, transmittance was measured again using the light of the wavelength that gave the transmittance of 80% before the irradiation. A case, where the lowering in the transmittance due to the irradiation of short wavelength ultraviolet rays was 0.3% or less while taking a measurement error into consideration, was rated as "O".

### INDUSTRIAL APPLICABILITY

The lighting glass and envelope of the invention are employed for cold cathode fluorescent lamps having electrodes made of Kovar, molybdenum or the like. In addition, other than these, they can also be employed for external electrode lamps in which electrodes are formed on the surface of an envelop. Furthermore, the lighting glass of the invention may be used as an envelope of a fluorescent lamp having a box-like shape or plane-like shape.

## Claims

1. A lighting glass comprising from 50 to 75% of SiO₂, from 12 to 25% of B₂O₃, from 0 to 3% of Al₂O₃, from 0 to 0.3% of Li₂O, from 0 to 7% of Na₂O, from 3 to 15% of K₂O, from 6 to 15% of Li₂O + Na₂O + K₂O, from 0 to 3.2% of Al₂O₃ + Li₂O, from 0 to 20% of BaO, from 0 to 15% of ZnO, from 2.5 to 4.9% of TiO₂ and from 0 to 5% of As₂O₃ + Sb₂O₃ in mass percentage, and having the coefficient of thermal expansion of from 45 to 58 × 10⁻⁷ /°C in the range of from 30 to 380°C.

2. The lighting glass according to claim 1, wherein TiO₂ is from 2.5 to 4.2% by mass.

3. The lighting glass according to claim 1, wherein Al₂O₃ + LiO is from 0 to 3% and TiO₂ is from 2.5 to 4.2% by mass.

4. Use of the lighting glass according to any of claims 1 - 3 as an envelope of a fluorescent lamp.

5. An envelope for a fluorescent lamp composed of the glass as described in any of claims 1 - 3.

## Patentansprüche

1. Beleuchtungsglas, das in Masseprozent von 50 bis 75 % an SiO₂, von 12 bis 25 % an B₂O₃, von 0 bis 3 % an Al₂O₃, von 0 bis 0,3 % an Li₂O, von 0 bis 7 % an Na₂O, von 3 bis 15 % an K₂O, von 6 bis 15 % an Li₂O + Na₂O + K₂O, von 0 bis 3,2 % an Al₂O₃ + Li₂O, von 0 bis 20 % an BaO, von 0 bis 15 % an ZnO, von 2,5 bis 4,9 % an TiO₂ und von 0 bis 5 % an As₂O₃ + Sb₂O₃ enthält und einen Koeffizienten der thermischen Ausdehnung von 45 bis 58 × 10⁻⁷/°C im Bereich von 30 bis 380 °C aufweist.

2. Beleuchtungsglas nach Anspruch 1, bei dem der Gehalt an TiO₂ von 2,5 bis 4,2 Masseprozent beträgt.

3. Beleuchtungsglas nach Anspruch 1, bei dem der Gehalt an Al₂O₃ + Li₂O von 0 bis 3 Masseprozent und der Gehalt an TiO₂ von 2,5 bis 4,2 Masseprozent beträgt.

4. Verwendung des Beleuchtungsglases nach einem der Ansprüche 1 bis 3 als Ummantelung einer Fluoreszenzlampe.

5. Ummantelung für eine Fluoreszenzlampe, gebildet aus einem Glas nach einem der Ansprüche 1 bis 3.

## Revendications

1. Verre pour éclairage comprenant de 50 à 75% de SiO₂, de 12 à 25% de B₂O3, de 0 à 3% de Al₂O₃, de 0 à 0,3% de Li₂O, de 0 à 7% de Na₂O, de 3 à 15% de K₂O, de 6 à 15% de Li₂O+ Na₂O + K₂O, de 0 à 3,2% de Al₂O₃ + Li₂O, de 0 à 20% de BaO, de 0 à 15% de ZnO, de 2,5 à 4,9% de TiO₂ et de 0 à 5% de As₂O₃ + Sb₂O₃, en pourcentage massique, et présentant un coefficient de dilation thermique de 45 à 58 x 10⁻⁷/°C dans l'intervalle de 30 à 380°C.

2. Verre pour éclairage selon la revendication 1, dans lequel la teneur en TiO₂ est de 2,5 à 4,2% en masse.

3. Verre pour éclairage selon la revendication 1, dans lequel la teneur en Al₂O₃ + Li₂O est de 0 à 3% et la teneur en TiO₂ est de 2,5 à 4,2% en masse.

4. Utilisationn du verre pour éclairage selon l'une quelconque des revendications 1 - 3, en tant qu'enveloppe d'une lampe fluorescente.

5. Enveloppe pour lampe fluorescente, formée du verre décrit dans l'une quelconque des revendications 1 - 3.
